# DEMANDE DE BREVET EUROPEEN

(11) **EP 2 479 513 A2**
(43) Date de publication de la demande: **25.07.2012**
(21) Numéro de dépôt: 11186460.9
(22) Date de dépôt: 25.10.2011
(51) Int. Cl.: F24J 2/52, F24J 2/46

(54) **Structure de panneaux photovoltaïques**

(30) Priorité: 25.01.2011 ES 201130060 U
(71) Demandeur: Producciones Mitjavila, S.A., 17730 Llers (ES)
(72) Inventeur: Mitjavila, Raymond, 66600 Rivesaltes (FR)
(74) Mandataire: Ponti Sales, Adelaida

(57) **Abrégé**

Structure de panneaux photovoltaïques (1, 2, 3, 4), comprenant au moins deux panneaux supérieurs (1, 2) fixés à chaque côté d'un premier profilé (5) disposé dans la direction de pente maximale et deux panneaux inférieurs ( 3, 4) fixés de chaque côté d'un second profilé (6) arrangé dans la direction de pente maximale, les profilés (5) premier et deuxième (6) comprenant chacun des extensions inférieures latérales (5a, 6a) formant des canaux de collecte d'eau, **caractérisée en ce que** ledit deuxième profilé fait saillie postérieurement par rapport aux panneaux inférieurs (3, 4), le premier profilé (5) étant en appui sur le deuxième profilé (6) et les panneaux supérieurs (1, 2) se chevauchant partiellement par rapport aux inférieurs (3, 4), de telle sorte qu'il se forme une structure en escalier avec des canaux de collecte d'eau sous les fixations latérales des panneaux (1, 2, 3, 4) avec les profilés (5, 6 ).

## Description

La présente invention concerne une structure de panneaux photovoltaïques, qui assure une étanchéité élevée à l'eau.

### CONTEXTE DE L'INVENTION

Des structures sont connues pour panneaux photovoltaïques équipées d'au moins deux panneaux supérieurs fixés de chaque côté d'un premier profilé agencé dans le sens de pente maximale et deux panneaux inférieurs fixés de chaque côté d'un deuxième profilé arrangé dans le sens de pente maximale, ces profilés étant premier et deuxième comprenant des extensions latérales qui constituent des canaux de collecte d'eau.

Des exemples de ces structures sont décrits par exemple dans les demandes de certificat d'utilité U201030574 et U201030114, du même demandeur.

Ces structures assurent une bonne étanchéité contre la pluie, notamment par canalisation efficace des eaux pluviales.

Basé sur un concept similaire, la présente invention fournit une solution alternative dans laquelle on utilise moins de composants et dont l'assemblage est simplifié davantage.

### DESCRIPTION DE L'INVENTION

Pour ce faire, la présente invention fournit une structure de panneaux photovoltaïques, comprenant au moins deux panneaux supérieurs fixés à chaque côté d'un premier profilé disposé dans la direction de pente maximale et deux autres panneaux inférieurs fixés de chaque côté d'un second profilé arrangé dans la direction de pente maximale, les profilés premier et deuxième comprenant chacun des extensions inférieures latérales formant des canaux de collecte d'eau, caractérisée en ce que ledit deuxième profilé fait saillie postérieurement par rapport aux panneaux inférieurs, le premier profilé étant en appui sur le deuxième profilé et les panneaux supérieurs se chevauchant partiellement par rapport aux inférieurs, de telle sorte qu'il se forme une structure en escalier avec des canaux de collecte d'eau sous les fixations latérales des panneaux aux profilés.

Avec cette structure, les profilés de pente maximale premier et second permettent de canaliser l'eau dans des conditions d'étanchéité et simultanément, l'emboîtement mutuel permet la réalisation de toitures de longue distance, quand les profilés restent couplés. Par conséquent, avec des profilés d'une longueur relativement réduite, il est possible d'obtenir une structure très étanche résistance dont l'installation est très rapide.

De préférence, les premiers profilés comprennent des rainures longitudinales latérales et les seconds profilés des languettes latérales longitudinales complémentaires aux rainures longitudinales latérales, de sorte que des guides longitudinaux sont configurés d'emboîtement et fixation mutuels entre les profilés premier et deuxième.

Selon diverses caractéristiques optionnelles de l'invention, prises isolément ou combinées autant que techniquement possible:
- les profilés premier et deuxième comprennent chacun à chaque côté des languettes d'appui latéral des panneaux.
- chacun des profilés premier et deuxième se complémente avec un profilé supérieur de serrage des panneaux sur les languettes latérales d'appui.
- la structure comprend des joints d'étanchéité disposés au niveau de la zone de chevauchement entre les panneaux supérieurs et les panneaux inférieurs, de préférence deux joints d'étanchéité superposés, le joint inférieur s'appuyant à pression sur le bord supérieur du panneau inférieur par un système de pince.
- le système de pince comprend un profilé supérieur qui presse supérieurement le joint contre le bord supérieur du panneau inférieur et un profilé inférieur qui presse inférieurement le bord supérieur du panneau inférieur et des moyens de serrage du profilé supérieur par rapport au profilé inférieur.
- le profilé supérieur a une section composée d'un T qui presse le joint, dont le pied se maintient uni à une section en U, orientée vers le profilé inférieur, qui permet ainsi de presser ce dernier contre le profilé supérieur par vissage de vis de fixation dans le logement de la section en U.
- le profilé inférieur a une section en L, dont la patte plus grande fait pression sur le bord inférieur du panneau, et dont la patte plus petite peut glisser vers l'extérieur par rapport à la section en U du profilé supérieur.
- la structure comprend une pièce de raccordement entre les profilés de serrage supérieur et inférieur au niveau de la marche entre les profilés supérieur et inférieur, qui comporte trois sections, une première section de fixation au profilé supérieur de serrage, une deuxième section de fixation du profilé inférieur de serrage et une section d'union entre les deux autres et qui suit la marche.
- les profilés premier et deuxième ont des sections identiques, et dont les extensions latérales de collecte d'eau se terminent extérieurement chacune en une paroi latérale sensiblement verticale, les rainures longitudinales latérales étant disposées à l'extérieur dans la partie basse des parois, et les languettes latérales longitudinales étant disposées internement dans la partie haute de ces parois.
- la structure comprend un profilé de serrage d'extrémité qui fait pression sur les côtés des panneaux d'extrémité de la structure, qui s'étend du côté libre de panneau, ce profilé s'étendant par une section en L, dont la partie plus grande dépasse la zone de collecte d'eau, dont la partie plus petite passe en dessous du bord du canal de collecte des profilés premier ou second.
- la structure comprend des premiers profilés de collecte d'eau couplés à la structure par son côté de moindre longueur, lesdits premiers profilés de collecte d'eau comprenant une section sensiblement verticale pourvue de coupes qui coïncident avec les canaux de collecte d'eau des profilés premiers ou deuxième, et une longue section horizontale qui est un plateau de collecte d'eau.

Finalement, la structure comprend des seconds profilés de collecte d'eau couplés à la structure par son côté de moindre dimension, lesdits seconds profilés comprenant une section sensiblement verticale destinée à couvrir l'ouverture sous les panneaux plus inférieurs, une longue section horizontale qui est un plateau de collecte d'eau, et une section supérieure arrière horizontale destinée a faire pression inférieurement sur un j oint d'étanchéité entre les panneaux et lesdits seconds profilés.

### BREVE DESCRIPTION DES DESSINS

Pour une meilleure compréhension de ce qui a été exposé quelques dessins sont fournis dans lesquels, de manière schématique et uniquement à titre d'exemple non limitatif, une réalisation concrète est illustrée.
La figure 1 est une vue en élévation latérale qui montre le chevauchement entre les profilés supérieur et inférieur, et la disposition en escalier des panneaux et le couvercle d'union à trois sections.
La figure 2 est une perspective de la structure de l'invention, qui montre la disposition relative des quatre panneaux.
La figure 3 est une section frontale de la structure au niveau de chevauchement entre les profilés supérieurs et inférieurs.
La figure 4 est une section au niveau de chevauchement entre les profilés supérieurs et inférieurs, qui ne représente que les profilés.
La figure 5 illustre en perspective l'emboîtement entre deux profilés disposés dans la direction de pente maximale.
La figure 6 est un détail du système de pince et d'étanchéité au niveau de la marche entre les panneaux supérieur et inférieur.
La figure 7 est une section d'une extrémité latérale de la structure où l'on peut voir le profilé d'extrémité avec section en L.
La figure 8 illustre en perspective le profilé d'extrémité.
Les figures 9 et 10 illustrent l'extrémité inférieure de la structure, assemblée et éclatée respectivement, composée de profilés de collecte d'eau en forme de plateaux.
Les figures 11 à 13 montrent une variante pour la réalisation de l'union entre les panneaux supérieurs et inférieurs, mais qui permet une ventilation de l'air, tout en empêchant le passage de l'eau.
Les figures 14 et 15 montrent les détails de la connexion entre chaque marche de la structure, en utilisant une pièce spécialement conçue pour cela.
Les figures 16 à 18 montrent les profilés utilisés dans la partie haute de la structure.

### DESCRIPTION D'UN MODE DE REALISATION PREFERÉE

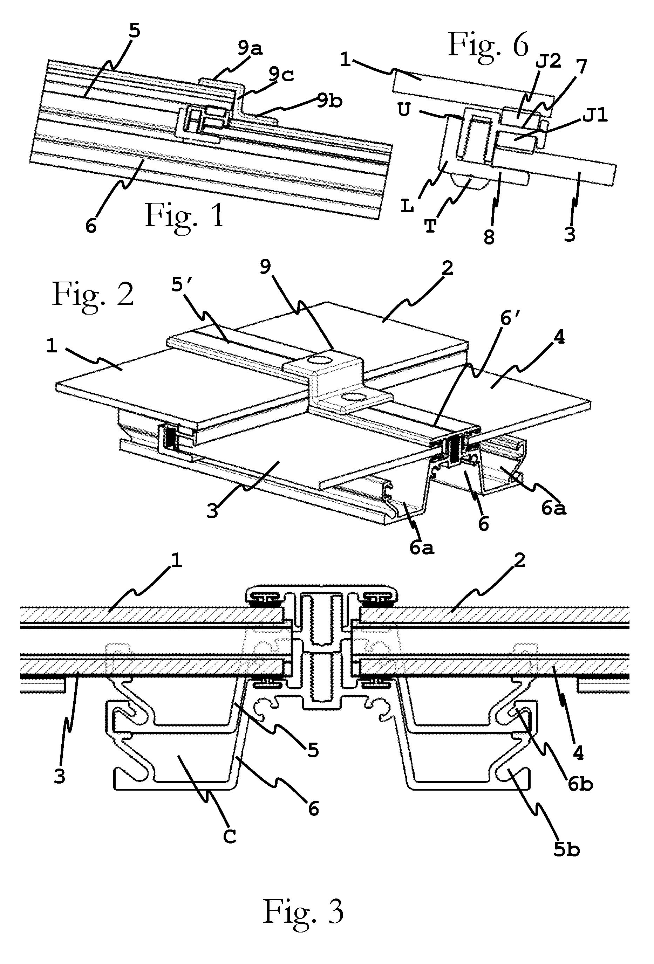

Comme cela est visible sur la figure 2, l'invention concerne une structure de panneaux photovoltaïques 1, 2, 3, 4, comprenant au moins deux panneaux supérieurs 1, 2 fixés à chaque côté d'un premier profilé 5 disposé dans la direction de pente maximale et deux autres panneaux inférieurs 3, 4 fixés de chaque côté d'un second profilé 6 arrangé dans la direction de pente maximale, les profilés 5 premier et deuxième 6 comprenant chacun des extensions inférieures latérales 5a, 6a formant des canaux de collecte d'eau, dans laquelle ledit deuxième profilé fait saillie postérieurement par rapport aux panneaux inférieurs 3, 4, le premier profilé 5 étant en appui sur le deuxième profilé 6 et les panneaux supérieurs 1, 2 se chevauchant partiellement par rapport aux inférieurs 3, 4, de telle sorte qu'il se forme une structure en escalier avec des canaux de collecte d'eau sous les fixations latérales des panneaux 1, 2, 3, 4 aux profilés 5, 6 .

Par conséquent, les profilés premier et deuxième permettent à la fois la collecte d'eau et ne pas avoir à recourir à des profilés de grande longueur, puisque les profilés successivement emboîtés permettent de couvrir toute la pente.

Comme il est visible sur la figure 3, les premiers profilés 5 comprennent des rainures longitudinales latérales 5b et les seconds profilés 6 des languettes latérales longitudinales 6b complémentaires aux rainures longitudinales latérales 5b, de sorte que des guides longitudinaux sont configurés 5b, 6b pour l'emboîtement et la fixation mutuels entre les profilés 5 premier et deuxième 6.

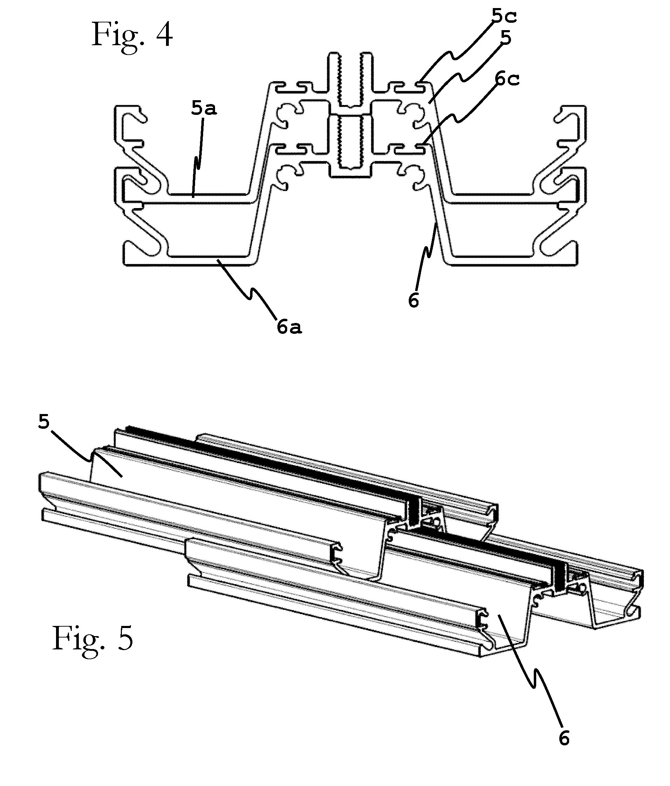

Il est souligné qu'il est possible avec une seule forme de profilé d'avoir les rainures et les languettes dans un même profilé, de sorte qu'il y a besoin de fabriquer un seul type de profilé. L'engagement ou emboîtement entre profilés identiques se réalise comme indiqué par exemple dans la figure 5.

Les profilés premier 5 et deuxième 6 comprennent chacun à chaque côté des languettes d'appui latéral 5c, 6c des panneaux, de préférence munis de joints d'étanchéité.

Comme le montre la figure 2, chacun des profilés 5 premier et deuxième 6 se complémente avec un profilé supérieur de serrage 5 ', 6' des panneaux sur les languettes latérales d'appui 5c, 6c., et de préférence aussi fourni avec un joint d'étanchéité.

Comme illustré à la figure 6, pour assurer l'étanchéité par rapport à l'espace sous les panneaux, la structure comprend au niveau de la zone de chevauchement entre les panneaux supérieurs 1, 2 et les panneaux inférieurs 3, 4 des joints d'étanchéité, étant possible ainsi de remplir l'espace formé entre deux panneaux, qui mesure de préférence entre 4 et 8 mm

De préférence, la structure comprend deux joints d'étanchéité J1, J2 superposés, le joint inférieur J1 s'appuyant à pression sur le bord supérieur du panneau inférieur 3, 4 par un système de pince. De la sorte, on peut utiliser deux joints d'épaisseur inférieure, stabilisées contre les panneaux par le système de pince.

La figure 6 montre que le système de pince comprend un profilé supérieur 7 qui presse supérieurement le joint J1 contre le bord supérieur du panneau inférieur 3, 4 et un profilé inférieur 8 qui presse inférieurement le bord supérieur du panneau inférieur 3, 4 et des moyens de serrage du profilé supérieur 7 par rapport au profilé inférieur 8. le profilé supérieur a une section composée d'un T qui presse le joint, dont le pied se maintient uni à une section en U, orientée vers le profilé inférieur 8, qui permet ainsi de presser ce dernier contre le profilé supérieur par vissage de vis de fixation dans le logement de la section en U

Le profilé inférieur 8 a une section en L, dont la patte plus grande fait pression sur le bord inférieur du panneau 3, 4, et dont la patte plus petite peut glisser vers l'extérieur par rapport à la section en U du profilé supérieur 7.

Comme le montre la figure 3, les joints et la pince n'arrivent pas jusqu'aux profilés premier ou second, pour ne pas gêner à la fixation de ces panneaux à ceux-ci.

La structure comprend un une pièce de raccordement 9 entre les profilés de serrage supérieur 5 ' et inférieur 6' au niveau de la marche entre les profilés supérieur 5 et inférieur 6 , qui comporte trois sections, une première section 9a de fixation au profilé supérieur de serrage 5 ', une deuxième section 9b de fixation du profilé inférieur de serrage 6' et une section d'union 9c entre les deux autres et qui suit la marche. Cette pièce, visible dans les figures 1 et 2, peut correctement remplir l'espace frontal du premier profilé qui est exposé à l'extérieur.

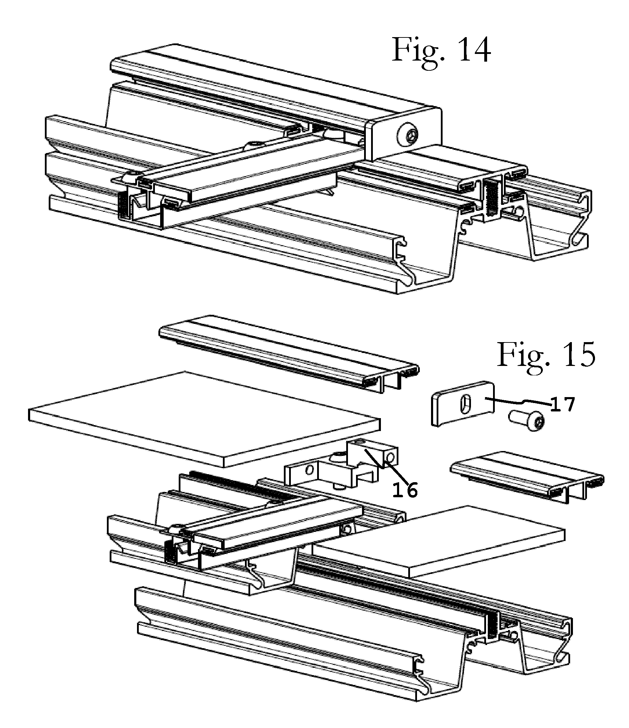

Comme le montrent les figures 14 et 15, une alternative à cette pièce peut être une pièce de raccordement 16 entre les premiers profilés 5 et les seconds profilés 6, destinée à rester unie par la section d'extrémité du premier profilé 5, et par la partie supérieure du second profilé 6. Cette pièce se complète par un couvercle 17 destiné à faire la finition vue du premier profilé 5 au niveau de la marche entre les deux profilés. La pièce est fixé par deux vis à l'intérieur deux rainures longitudinales du profilé destinés à cet effet.

Comme il est représenté par exemple dans les figures 3 et 4, les profilés premier et deuxième ont des sections identiques, et dont les extensions latérales de collecte d'eau se terminent extérieurement chacune en une paroi latérale sensiblement verticale, les rainures longitudinales latérales 5b étant disposées à l'extérieur dans la partie basse des parois, et les languettes latérales longitudinales 6b étant disposées internement dans la partie haute de ces parois.

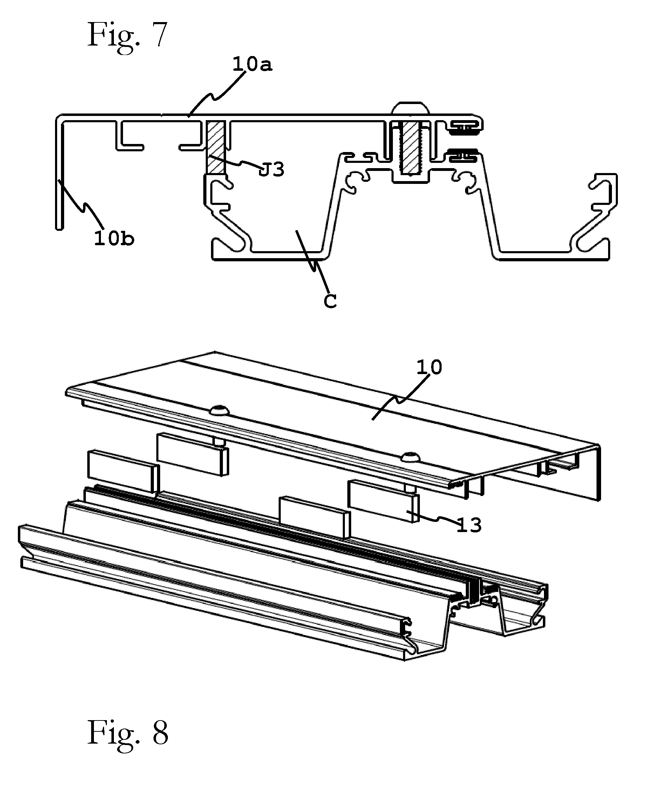

Comme le montrent les figures 7 et 8, pour terminer la structure latéralement, un profilé de serrage d'extrémité 10 qui fait pression sur les côtés des panneaux d'extrémité de la structure, qui s'étend du côté libre de panneau, ce profilé s'étendant par une section en L, dont la partie plus grande 10 bis dépasse la zone de collecte d'eau C, dont la partie plus petite 10b passe en dessous du bord du canal de collecte des profilés premier ou second 5, 6..

Le profilé de serrage d'extrémité 10 est pourvu d'un logement pour soutenir les plaques d'appui 13 qui transmettent l'appui entre le profilé de serrage d'extrémité 10 et le bord supérieur de l'extension latérale de collecte d'eau des profilés premier ou second 5, 6.

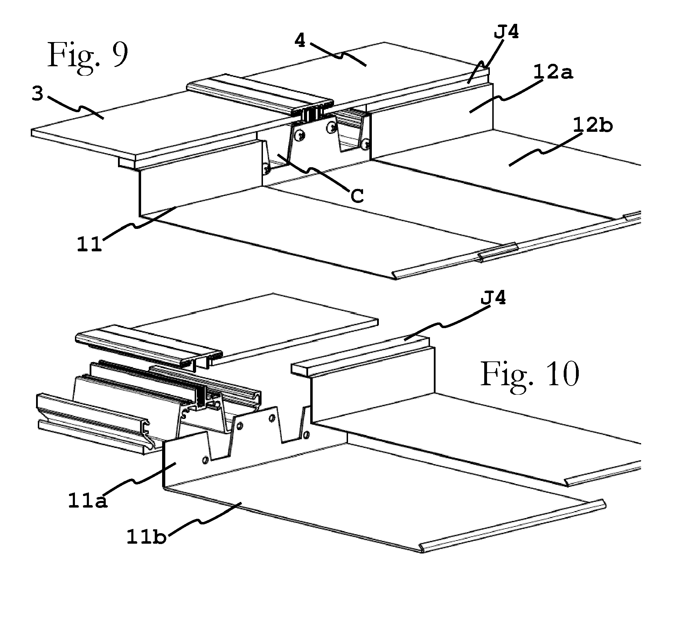

En option, comme le montrent les figures 9 et 10, la structure comprend des premiers profilés de collecte d'eau 11 couplés à la structure par son côté de moindre longueur, lesdits premiers profilés de collecte d'eau comprenant une section sensiblement verticale 11a pourvue de coupes qui coïncident avec les canaux de collecte d'eau C des profilés premiers ou deuxième 5, 6, et une longue section horizontale 11b qui est un plateau de collecte d'eau.

Ces profilés 11 sont complétés par des seconds profilés de collecte d'eau 12 couplés à la structure par son côté de moindre dimension, lesdits seconds profilés comprenant une section sensiblement verticale 12a destinée à couvrir l'ouverture sous les panneaux plus inférieurs, une longue section horizontale 12b qui est un plateau de collecte d'eau, et une section supérieure arrière horizontale 12c destinée a faire pression inférieurement sur un joint d'étanchéité J4 entre les panneaux 3, 4 et lesdits seconds profilés 12.

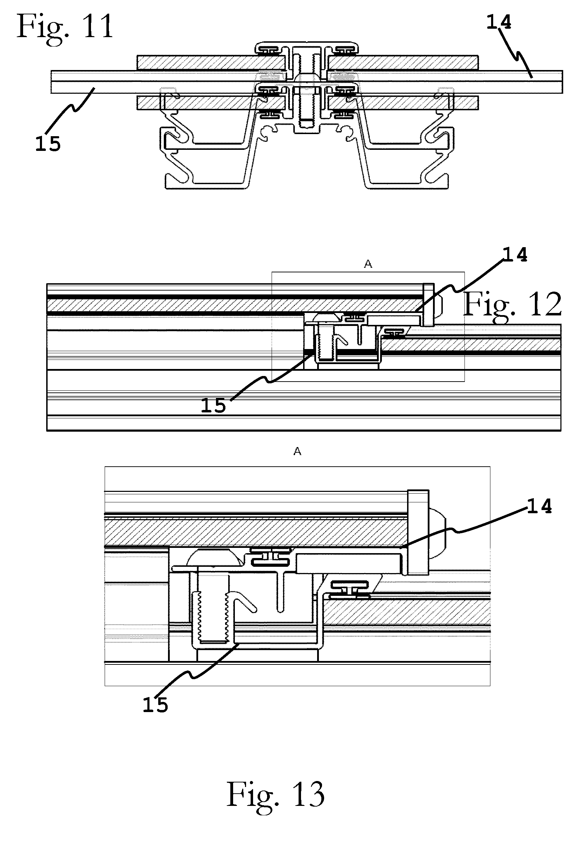

Comme le montrent les figures 11 à 13, les premiers panneaux comprennent sur la face inférieure et sur l'extrémité inférieur un profilé pourvu d'une languette tournée vers le bas 14, les seconds panneaux comprennent sur leur face supérieure et sur l'extrémité supérieur un profilé en U 15, la languette tournée vers le bas 14 étant disposée dans la concavité du profilé en U, mais sans contact, de sorte qu'il se forme un labyrinthe d'entrée de ventilation d'air. Cette version est une alternative à celle qui comprend des joints, ce qui peut être appliquée lorsque la ventilation n'est pas désirée en échange d'une isolation thermique supérieure.

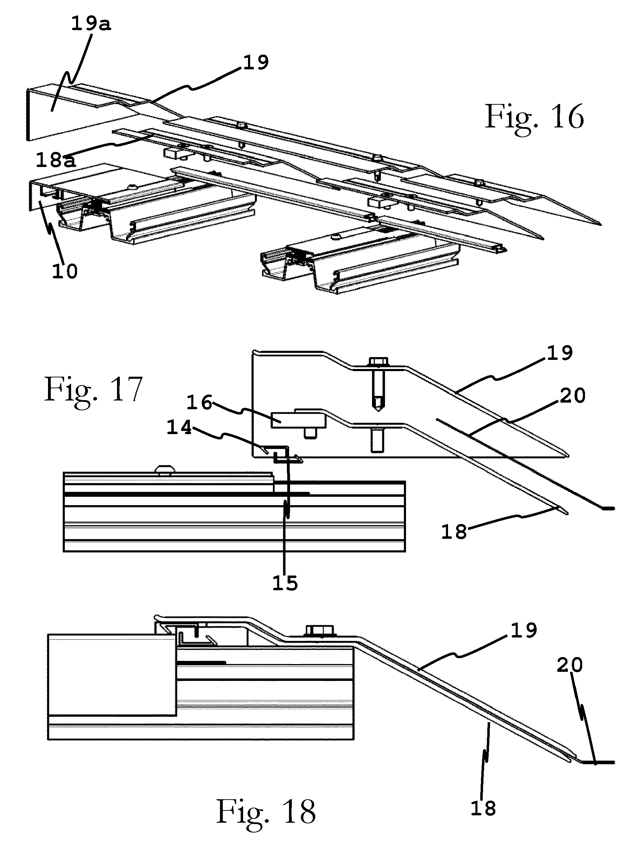

Enfin, comme indiqué dans les figures 16 à 18, la structure comprend dans sa partie supérieure, c'est à dire en amont, des profilés 18 minces pourvus d'au moins une partie à section horizontale 18a pour la liaison au bord inférieur du panneau inférieur, et une partie à section inclinée 18b destinée à servir de rampe de canalisation des eaux.. L'union entre les profilés 18 et le bord supérieur des panneaux est réalisée par une pièce de raccordement 16, cette fois sans la nécessité du couvercle 17 et des profilés en U 14 et 15 afin d'assurer l'étanchéité et d'aération dans la partie haute de la structure. Par conséquent, la partie de section est unie par une vis à la surface supérieure de la pièce de raccordement 16 qui s'emboîte dans le profilé 6 de la structure.

Il est également prévu un profilé 19 d'extrémité latérale et inférieure, dont la section est identique à la section du profilé 18 mince, de sorte qu'ils peuvent être superposées sans espace, le profilé 19 d'extrémité latérale et inférieure comprenant une jupe latérale 19a perpendiculaire au profilé qui assure la fonction de couvercle latéral de la structure pour assurer la continuité de la jupe latérale de profilé de serrage 10 d'extrémité.

La possibilité de chevauchement des 19 profilés et 20, comme indiqué dans les figures 17 et 18, permet emboîter entre ceux-ci des profilés 20 d'étanchéité, qui permet la vente supérieure de la structure, pour assurer aussi l'étanchéité dans cet espace, puis éviter, par exemple, que des gouttes d'eau tombent dans la partie d'extrémité supérieure de la structure dans un espace intérieur fermé.

## Revendications

1. Structure de panneaux photovoltaïques (1, 2, 3, 4), comprenant au moins deux panneaux supérieurs (1, 2) fixés à chaque côté d'un premier profilé (5) disposé dans la direction de pente maximale et deux autres panneaux inférieurs ( 3, 4) fixés de chaque côté d'un second profilé (6) arrangé dans la direction de pente maximale, les profilés (5) premier et deuxième (6) comprenant chacun des extensions inférieures latérales (5a, 6a) formant des canaux de collecte d'eau, **caractérisée en ce que** ledit deuxième profilé fait saillie postérieurement par rapport aux panneaux inférieurs (3, 4), le premier profilé (5) étant en appui sur le deuxième profilé (6) et les panneaux supérieurs ( 1, 2) se chevauchant partiellement par rapport aux inférieurs (3, 4), de telle sorte qu'il se forme une structure en escalier avec des canaux de collecte d'eau sous les fixations latérales des panneaux (1, 2, 3, 4) aux profilés (5, 6 ).

2. Structure selon la revendication précédente, dans laquelle les premiers profilés (5) comprennent des rainures longitudinales latérales (5b) et les seconds profilés (6) des languettes latérales longitudinales (6b) complémentaires aux rainures longitudinales latérales (5b), de sorte que des guides longitudinaux sont configurés (5b, 6b) d'emboîtement et fixation mutuels entre les profilés (5) premier et deuxième (6).

3. Structure selon l'une quelconque des revendications précédentes dans laquelle les profilés premier (5) et deuxième (6) comprennent chacun à chaque côté des languettes d'appui latéral (5c, 6c) des panneaux.

4. Structure selon la revendication précédente, dans laquelle chacun des profilés (5) premier et deuxième (6) se complémente avec un profilé supérieur de serrage (5 ', 6') des panneaux sur les languettes latérales d'appui (5c, 6c).

5. Structure selon l'une quelconque des revendications précédentes, qui comprend des j oints d'étanchéité disposés au niveau de la zone de chevauchement entre les panneaux supérieurs (1, 2) et les panneaux inférieurs (3, 4).

6. Structure selon la revendication précédente, comprenant au niveau de la zone de chevauchement entre les panneaux supérieurs (1, 2) et les panneaux inférieurs (3, 4), deux joints d'étanchéité (J1, J2) superposés, le joint inférieur (J1) s'appuyant à pression sur le bord supérieur du panneau inférieur (3, 4) par un système de pince.

7. Structure selon la revendication précédente, dans laquelle le système de pince comprend un profilé supérieur (7) qui presse supérieurement le joint (J1) contre le bord supérieur du panneau inférieur (3, 4) et un profilé inférieur (8) qui presse inférieurement le bord supérieur du panneau inférieur (3, 4) et des moyens de serrage du profilé supérieur (7) par rapport au profilé inférieur (8).

8. Structure selon la revendication précédente, dans laquelle le profilé supérieur a une section composée d'un T qui presse le joint, dont le pied se maintient uni à une section en U, orientée vers le profilé inférieur (8), qui permet ainsi de presser ce dernier contre le profilé supérieur par vissage de vis de fixation dans le logement de la section en U.

9. Structure selon la revendication précédente, dans laquelle le profilé inférieur (8) a une section en L, dont la patte plus grande fait pression sur le bord inférieur du panneau (3, 4), et dont la patte plus petite peut glisser vers l'extérieur par rapport à la section en U du profilé supérieur (7).

10. Structure selon l'une quelconque des revendications 4 à 9, comprenant une pièce de raccordement (9) entre les profilés de serrage supérieur (5 ') et inférieur (6') au niveau de la marche entre les profilés supérieur (5) et inférieur (6), qui comporte trois sections, une première section (9a) de fixation au profilé supérieur de serrage (5 '), une deuxième section (9b) de fixation du profilé inférieur de serrage (6') et une section d'union (9c) entre les deux autres et qui suit la marche.

11. Structure selon l'une quelconque des revendications précédentes et la revendication 2, dans laquelle les profilés premier et deuxième ont des sections identiques, et dont les extensions latérales de collecte d'eau se terminent extérieurement chacune en une paroi latérale sensiblement verticale, les rainures longitudinales latérales ( 5b) étant disposées à l'extérieur dans la partie basse des parois, et les languettes latérales longitudinales (6b) étant disposées internement dans la partie haute de ces parois.

12. Structure selon l'une quelconque des revendications précédentes comportant un profilée de serrage d'extrémité (10) qui fait pression sur les côtés des panneaux d'extrémité de la structure, qui s'étend du côté libre de panneau, ce profilé s'étendant par une section en L, dont la partir plus grande (10 bis) dépasse la zone de collecte d'eau (C), dont la partie plus petite (10b) passe en dessous du bord du canal de collecte des profilés premier ou second (5, 6).

13. Structure selon la revendication précédente, dans laquelle le profilé de serrage d'extrémité (10) est pourvu d'un logement pour soutenir les plaques d'appui (13) qui transmettent l'appui entre le profilé de serrage d'extrémité (10) et le bord supérieur de l'extension latérale de collecte d'eau des profilés premier ou second (5, 6).

14. Structure selon l'une quelconque des revendications précédentes comprenant des premiers profilés de collecte d'eau (11) couplés à la structure par son côté de moindre longueur, lesdits premiers profilés de collecte d'eau comprenant une section sensiblement verticale (11a) pourvue de coupes qui coïncident avec les canaux de collecte d'eau (C) des profilés premiers ou deuxième (5, 6), et une longue section horizontale (11b) qui est un plateau de collecte d'eau.

15. Structure selon la revendication précédente, comprenant des seconds profilés de collecte d'eau (12) couplés à la structure par son côté de moindre dimension, lesdits seconds profilés comprenant une section sensiblement verticale (12a) destinée à couvrir l'ouverture sous les panneaux plus inférieurs, une longue section horizontale (12b) qui est un plateau de collecte d'eau, et une section supérieure arrière horizontale (12c) destinée a faire pression inférieurement sur un joint d'étanchéité (J4) entre les panneaux (3, 4) et lesdits seconds profilés ( 12).

16. Structure selon l'une quelconque des revendications 1 à 4, dans laquelle les premiers panneaux comprennent sur la face inférieure et sur l'extrémité inférieur un profilé pourvu d'une languette tournée vers le bas (14), les seconds panneaux comprennent sur leur face supérieure et sur l'extrémité supérieur un profilé en U (15), la languette tournée vers le bas (14) étant disposée dans la concavité du profilé en U, mais sans contact, de sorte qu'il se forme un labyrinthe d'entrée de ventilation d'air.

17. Structure selon l'une quelconque des revendications précédentes comprenant une pièce de raccordement (16) entre les premiers profilés (5) et les seconds profilés (6), destinée à rester unie par la section d'extrémité du premier profilé (5), et par la partie supérieure du second profilé (6).

18. Structure selon la revendication précédente, dans laquelle la pièce de raccordement (16) entre les premiers profilés (5) et les seconds profilés (6) comporte un couvercle (17) destiné à faire la finition vue du premier profilé (5) au niveau de la marche entre les deux profilés.

19. Structure selon l'une quelconque des revendications précédentes comprenant des profilés (18) minces pourvus d'au moins une partie à section horizontale (18a) pour la liaison au bord inférieur du panneau inférieur, et une partie à section inclinée (18b) destinée à servir de rampe de descente des eaux.

20. Structure selon la revendication précédente, dans laquelle l'union entre les profilés (18) minces et le bord supérieur des panneaux comprend une pièce de raccordement selon la revendication 17, et un ensemble de deux profilés selon la revendication 16, de sorte que l'étanchéité et la ventilation de la partie haute de la structure sont assurées.

21. Structure selon l'une quelconque des deux revendications précédentes, comprenant un profilé (19) d'extrémité latérale et inférieure, dont la section est identique à la section du profilé (18) mince, de sorte qu'ils peuvent être superposées sans espace, le profilé (19) d'extrémité latérale et inférieure comprenant une jupe latérale (19a) perpendiculaire au profilé qui assure la fonction de couvercle latéral de la structure pour assurer la continuité de la jupe latérale de profilé de serrage (10) d'extrémité.
